# EUROPEAN PATENT SPECIFICATION

(11) **EP 1 669 392 B1**
(45) Date of publication and mention of the grant of the patent: **01.12.2010**
(21) Application number: 04791980.8
(22) Date of filing: 01.10.2004
(51) Int. Cl.: C08G 75/23, C08G 65/48, H01B 1/06, H01M 8/10

(54) **SULFONATED AROMATIC POLYETHERS, PROCESS FOR PRODUCTION THEREOF, AND ELECTROLYTE MEMBRANES**
SULFONIERTE AROMATISCHE POLYETHER, HERSTELLUNGSVERFAHREN DAFÜR UND ELEKTROLYTMEMBRANEN
POLYETHERS AROMATIQUES SULFONES, PROCEDE DE PRODUCTION CORRESPONDANT ET MEMBRANES ELECTROLYTIQUES

(30) Priority: 02.10.2003 JP 2003344782
(43) Date of publication of application: 14.06.2006
(73) Proprietor: University of Yamanashi, Yamanashi 4008510 (JP)
(72) Inventor: WATANABE, Masahiro, 4000001 (JP); MIYATAKE, Kenji, 4000024 (JP); UCHIDA, Hiroyuki, 4000015 (JP)
(74) Representative: Wibbelmann, Jobst
(86) International application number: PCT/JP2004/014513
(87) International publication number: WO 2005/033182

(56) References cited:
- EP-A- 1 113 517
- JP-A- 2001 325 990
- JP-A- 2001 325 990
- JP-A- 2002 110 174
- JP-A- 2002 367 629
- JP-A- 2002 367 629
- JP-A- 2003 012 795
- JP-A- 2003 012 795
- JP-A- 2003 100 317
- JP-A- 2003 147 074
- JP-A- 2003 147 074
- JP-A- 2004 137 449

## Description

This invention relates to a novel sulfonated aromatic polyether, a method for producing the same, and an electrolyte membrane.

### BACKGROUND ART

A fuel cell is an electric generating equipment that directly converts chemical reaction energy of oxygen and hydrogen into electric energy, and it is taken to be a hopeful view as a clean energy of next generation that do not generate a greenhouse gas or a harmful substance. Especially, as to proton-exchange membrane fuel cell (PEFC) and Direct Methanol Fuel Cell (DMFC), size reduction and weight saving can be achieved, therefore, they are very suitable as an electric power supply for electric vehicles, residential or portable devices.

In general, PEFC and DMFC are driven under a temperature below 80°C. In order to achieve high performance, it is desirable to run at a temperature of above 120°C, in view of catalytic activity, catalyst poisoning and utilization of the waste heat. The electrolyte membranes utilized for PEFC and DMFC are ion exchange membranes which penetrate only proton under wet condition. Currently, perfluorinated electrolyte membranes (perfluoro sulfonate polymers such as Nafion, Aciplex and Flemion) have been utilized. However, for reduction in proton conductivity and membrane strength occurs above 100°C, they can not be adopted for high-temperature operation. Moreover, because of considerable problems such as penetration of fuel gas and high cost, achievement of high performance fuel cells has been prevented.

To solve such problems, introduction of strong acidic groups into aromatic polymers has been investigated to produce an electrolyte membrane. Aromatic polyethers have been considered to be one of promising structures as their backbones, in view of heat-resistance, acid-resistance, mechanical strength, cost and facility of introduction of the substituent. Until now, many kinds of aromatic polyether electrolyte membranes have been developed, and polyether sulfone having sulfonic acid groups (JP 2003-31232) and polyether ketone (JP 06-49202) have been reported, for example. Nonetheless, conductive property above 100°C, and oxidative and hydrolytic stability are not sufficient yet.

Electrolyte membranes in which sulfonic acid groups are introduced into polyether macro molecules having bulky aromatic groups (such as fluorenyl diphenylene group and phenyl methylene diphenylene group) have been reported (JP 2003-147074, JP 2003-147076). However, sulfonic acid groups are introduced into both of the main chain and the side chain, and morphological change has been observed for 3 days in water for durability. Therefore, essential solution has not been achieved yet.

In order to increase proton conductivity, introduction of sulfonic acid group should be increased. Despite of it, the increase in sulfonic acid group results in decreased stability. Especially, when sulfonic acid groups are introduced into the main chain of the polymer, significant decrease in hydrolytic stability is observed. Accordingly, having both properties of proton conductivity and hydrolytic stability were found to be very difficult.

### DETAILED EXPLANATION OF THE INVENTION

Considering such situation, in order to achieve high-output in a fuel cell, the object of this invention is to provide a novel sulfonated aromatic polyether and a method for producing the same, which is suitable as an electrolyte for the fuel cell. Moreover, the object of this invention is to provide a prominent electrolyte membrane using the sulfonated aromatic polyether.

For the purpose to solve the object, the inventors tried to introduce an ionic functional group (i.e. sulfonic acid group) into aromatic polyether, which has superior properties on heat resistance and chemical resistance. It is assumed that a proton conductive membrane having superior durability can be produced at low cost. The inventors made extensive investigations and found a method for producing a sulfonated aromatic polyether in which introduction of sulfonic acid groups is limited to fluorenyl groups in the side chain. In the sulfonated aromatic polyether, the site of sulfonation (introduction of sulfonic acid group) is strictly defined, the aromatic rings in the main chain are free from the sulfonic acid groups absolutely. Therefore, the main chain is highly hydrophobic and is not attacked by water molecules and hydrophilic radicals (hydrolysis, oxidation) at all. From such knowledge, it was found that the sulfonated aromatic polyether has superior properties in both of proton conductivity above 100°C and hydrolytic stability, which resulted in completion of this invention. Meanwhile, throughout in this specification, each compound is identified by the number of chemical formulas assigned to each chemical formulas, such as (Chemical formula 1).

This invention is described in detail hereafter, the detailed explanation and the examples are not intended to limit or restrict the range of the invention in any way.

**[****Fig.1]** Fig.1 is a figure showing the concrete examples of Ar₁ and Ar₂.
**[****Fig.2]** Fig.2 is a figure showing a NMR spectrum of the compound obtained in the Example 1.
[Fig.3] Fig.3 is a figure showing a NMR spectrum of the compound obtained in the Example 4.

### DETAILED DESCRIPTION OF THE INVENTION

This invention relates to a sulfonated aromatic polyether **characterized in that** the fundamental backbone is represented by the formula (1).

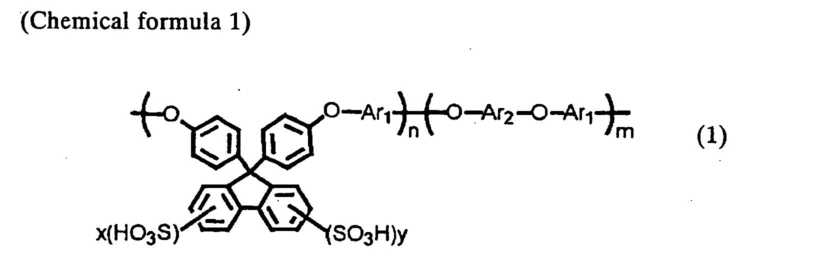

In the general formula (1), Ar₁ and Ar₂ are C₆₋₂₀ groups containing aromatic ring(s) each of which is selected independently, the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group.
In the general formula (1), x and y are each integer of 0 to 3 which represent the degree of sulfonation, with the proviso that the case where both of x and y are simultaneously 0 is excluded, and n and m are each an integer of not lower than 2 which represent the degree of polymerization

Preferably, the concrete fundamental backbone may be the sulfonated aromatic polyether represented by the general formula (2).

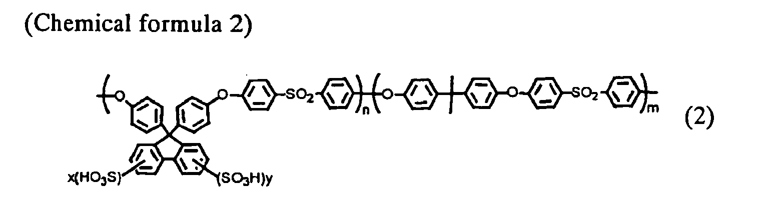

In the formula (2), x and y are each integer of 0 to 3 which represent the degree of sulfonation, with the proviso that the case where both of x and y are simultaneously 0 is excluded. Moreover, n and m are each an integer of not lower than 2 which represent the degree of polymerization.

Moreover, in said formula (1), Ar₂ may preferably be sulfonated fluorenyl diphenyl group. That is, this invention provides a sulfonated aromatic polyether **characterized in that** the fundamental backbone is represented by the general formula (3).

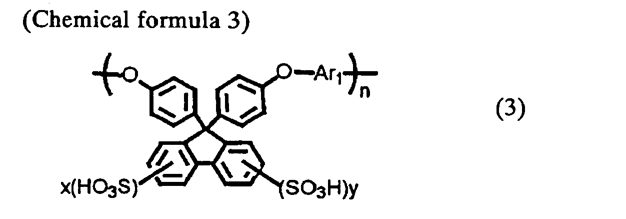

In the formula (3), Ar₁ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group.
In the formula (3), x and y are each integer of 0 to 3 which represent the degree of sulfonation, with the proviso that the case where both of x and y are simultaneously 0 is excluded, and n is an integer of not lower than 2 which represent the degree of polymerization.

Preferably, the concrete fundamental backbone may be the sulfonated aromatic polyether represented by the general formula (4).

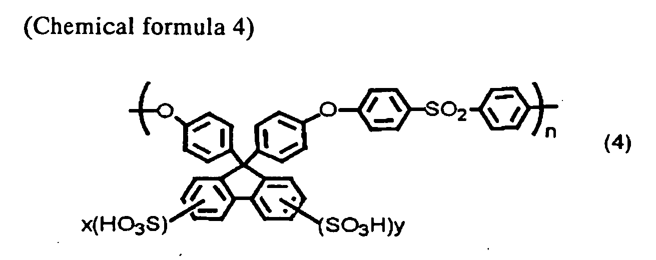

In the formula (4) x and y are each integer of 0 to 3 which represent the degree of sulfonation, with the proviso that the case where both of x and y are simultaneously 0 is excluded. Moreover, n is an integer of not lower than 2 which represent the degree of polymerization.

As a method for production of the sulfonated aromatic polyether mentioned above as preferred embodiment, this invention provides a method **characterized in that** the side chain of the aromatic polyether represented by the general formula (5) is selectively sulfonated;

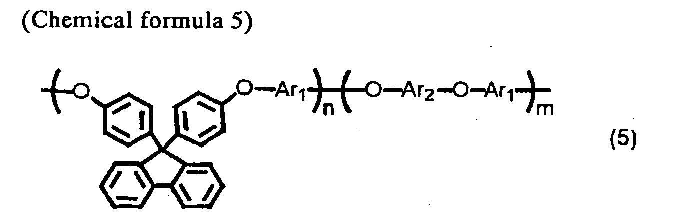

In the general formula (5), Ar₁ and Ar₂ are C₆₋₂₀ groups containing aromatic ring(s) each of which is selected independently, the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group.
In the general formula (5), n and m are each an integer of not lower than 2 which represent the degree of polymerization.

As a method for production of the sulfonated aromatic polyether mentioned above as preferred embodiment, this invention provides a method **characterized in that** the side chain of the aromatic polyether is selectively sulfonated, the method comprising the step of polycondensation of the following compounds;
a fluorenyl diphenyl compound represented by the general formula (6) ; 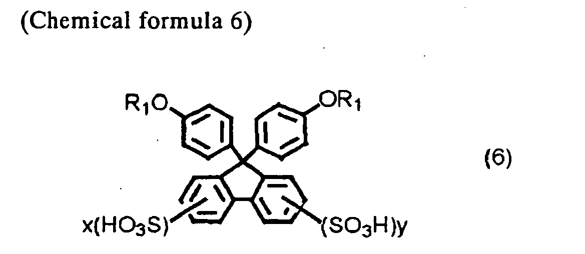 in the general formula (6), x and y are each integer of 0 to 3 which represent the degree of sulfonation, with the proviso that the case where both of x and y are simultaneously 0 is excluded, and R₁ is selected from a hydrogen atom, an alkaline metal atom, an alkaline earth metal atom, an alkyl carbamoyl group, and an alkyl sulfonyl group, and
a dihalo-aromatic compound represented by the general formula (7);

(Chemical formula 7) X-Ar₁-X (7)

in the general formula (7), Ar₁ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group, and X is a halogen atom such as fluorine, chlorine, bromine and iodine, and
a dihydroxy-aromatic compound represented by the general formula (8) ;

(Chemical formula 8) HO-Ar₂-OH (8)

in the general formula (8), Ar₂ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group.

By utilizing such sulfonated aromatic polyether according to this invention or a sulfonated aromatic polyether produced by the method for the production of the sulfonated aromatic polyether according to this invention, an electrolyte membrane which can solve the problem described above can be obtained.

### (The effect of this invention)

According to this invention, a proton conductive membrane having superior durability can be provided at low cost, by introducing ionic functional groups into an aromatic polyether having superior properties in heat resistance and chemical resistance. Moreover, according to this invention, a novel method for production of a sulfonated aromatic polyether is provided, **characterized in that** the fluorenyl group in the side chain is selectively sulfonated. In the sulfonated aromatic polyether according to this invention, the site of sulfonation (introduction of sulfonic acid group) is very strictly defined, therefore, the aromatic rings in the main chain are absolutely free from sulfonic acid group. As a result, the electrolyte membrane according to this invention is advantageous in that it has superior properties on the proton conductivity above 100°C and oxidative and hydrolytic stability.

### THE BEST MODE TO CARRY OUT THIS INVENTION

### (Sulfonated aromatic polyether)

The sulfonated aromatic polyether according to this invention is **characterized in that** it is represented by the general formula (1) described above.

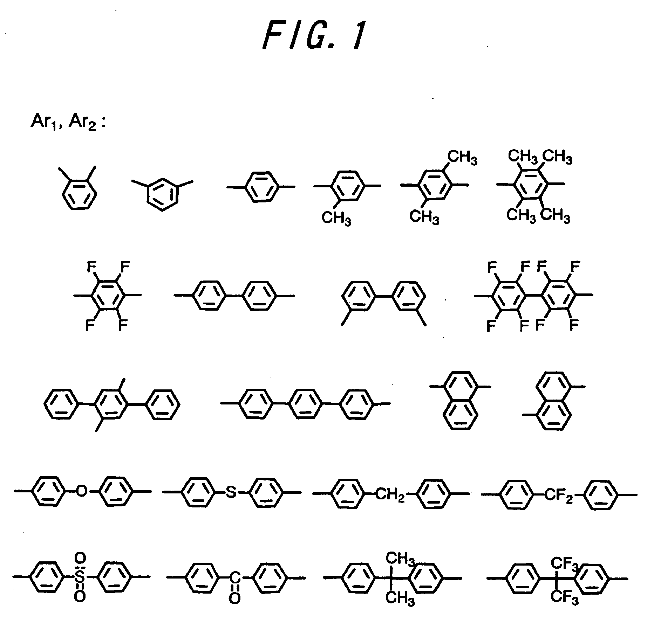

The list of concrete substituents preferred as Ar₁ and Ar₂ in the general formula (1) is shown in Fig.1. Meanwhile, Ar₁ and Ar₂ may be each selected independently and they may be identical, otherwise Ar₁ and Ar₂ do not need to be identical at all, plural substituents may be mixed.

Especially, the concrete fundamental backbone may preferably be the sulfonated aromatic polyether represented by the general formula (2). The number of bonded sulfonic acid groups and the site of sulfonation in the structure presented by formula (2) are not particularly limited, however, the sulfonated aromatic polyether in which sulfonic acid groups are bonded at the sites represented by the following general formula (9) is preferable.

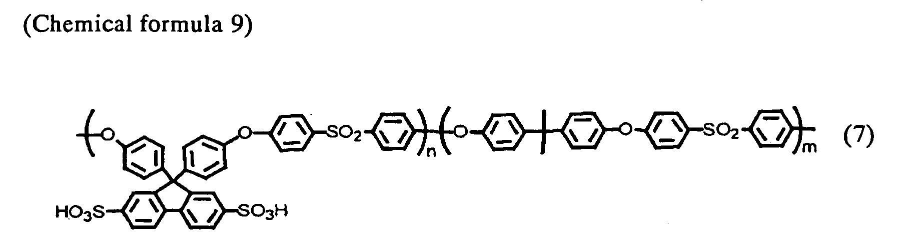

The molecular weights of the sulfonated aromatic polyethers, represented by the general formulas (1), (2) and (9), are not particularly limited, however, the weight-average molecular weight may preferably be not lower than 5000, considering the mechanical strength of the electrolyte membrane.

Moreover, as to n and m in the general formulas (1), (2) and (9), the value of n/m may preferably be lower than 95/5 and higher than 10/95. However, it is not limited within this range. The water resistance of the sulfonated aromatic polyether can be improved in the case n/m is lower than 95/5, and the proton conductivity can be improved in the case n/m is higher than 10/90. Moreover, the value of n/m may preferably be not higher than 90/10 and not lower than 30/70.

Meanwhile, the sulfonated aromatic polyether according to this invention is a copolymer represented by the general formulas (1), (2) and (9), comprising the polymerization units shown in the brackets and having polymerization degrees of n and m. The order of the two polymerization units may be regular (block copolymer, alternating copolymer), otherwise it may be irregular (random copolymer).

In addition, the case where Ar₂ in the general formula (1) is sulfonated fluorenyl diphenylene corresponds to the sulfonated aromatic polyether represented by the general formula (3). In this invention, taking the structure according to the general formula (3) is a preferred embodiment. The numbers of bonded sulfonic acid groups and the sites of sulfonation in the general formula (3) is not particularly limited, the sulfonated aromatic polyether in which the sulfonic acid groups are bonded at the sites shown in the following formula (10) is preferred.

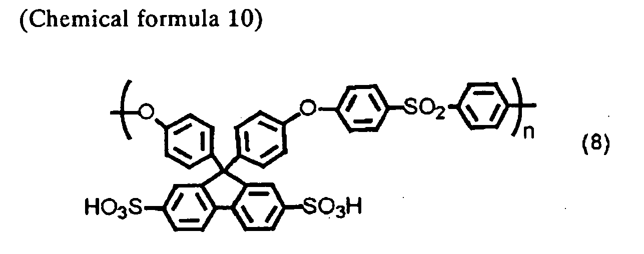

Here, the molecular weights of the sulfonated aromatic polyethers represented by the general formulas (3) and (10) are not particularly limited, however, the weight-average molecular weight may preferably be not lower than 5000, considering the mechanical strength of the electrolyte membrane.

### (The method for production of the sulfonated aromatic polyether)

The sulfonated aromatic polyether represented by the general formula (1) can be obtained by sulfonation of the aromatic polyether represented by the general formula (5).

As a sulfonating agent, agents such as sulfuric acid, fuming sulfuric acid, sulfuric anhydride and chlorosulfuric acid can be utilized, the available sulfonating agents are not limited to these acids.

The sulfonating reaction can be performed in the absence of a solvent, but it can be also performed in the presence of a solvent. For example, hydrocarbon solvents such as pentane, hexane, benzene, toluene and xylene; halogenated hydrocarbon solvents such as dichloromethane, chloroform, carbon tetrachloride, dichloroethane, tetrachloroethane, trichlorofluoromethane, 1,1,2-trichloro-1,2,2-trifluoroethane; solvents containing nitrogen such as nitromethane, nitroethane, nitropropane and nitrobenzene can be listed as solvents useful in this reaction. However, the solvents are not limited to those listed above. In addition, solvents generally utilized in Friedel-Crafts reaction can be also utilized. The most preferred solvent may be dichloromethane.

Meanwhile, as to these solvents, one kind of solvent can be utilized solely, otherwise two kinds of solvents can be also mixed and utilized.

The concentration of aromatic polyether utilized in the sulfonating reaction alters according to the sulfonating agent or the solvent, the concentration may be 0.1mM to 5M in general, and the concentration may preferably be 5mM to 1M. However, the concentration of the aromatic polyether is not limited within this range.

The reaction time may alter significantly according to the conditions such as the kind and the concentration of the polyether utilized, the temperature of the reaction, the sulfonating agent and the solvent utilized, the reaction time may be 0.1 to 200 hours in general, and the reaction time may preferably be 2 to 80 hours. However, the reaction time is not limited within this range.

In construction of the reaction system, the order and the method for mixing the aromatic polyether, the sulfonating agent and the solvent are not particularly limited, each of them may be mixed simultaneously, otherwise they may be mixed in steps according to various orders and manners.

The temperature of this reaction may be -50°C to 150°C, preferably 0°C to 60°C. However, the reaction temperature is not limited within this range.

The pressure of the reaction is not particularly limited, and the pressure may be increased or decreased as needed. In general, the reaction may be performed under the atmospheric pressure or the native pressure of the reaction system. The reaction may be performed under increased pressure using a mixed gas and the mixed gas may comprise a diluted gas that does not interfere the sulfonating reaction.

Moreover, the sulfonated aromatic polyether can be also obtained by polycondensation of a sulfonated fluorenyl diphenol compound, a dihalo-aromatic compound and a dihydroxy-aromatic compound.

The sulfonated fluorenyl diphenol compounds utilized in this invention may be those represented by the general formula (6).

In the general formula (6), x and y are each integer of 0 to 3 which represent the degree of sulfonation with the proviso that the case where both of x and y are simultaneously 0 is excluded. The x and y may be identical or different. The embodiment where x=y=1 is the most preferred, considering the facility of synthesis and the stability of the sulfonated fluorenyl diphenol which is obtained as a result.

In the general formula (6), Ar₁ represents an alkaline metal atom such as lithium, sodium, potassium, rubidium and cesium; an alkaline earth metal atom such as magnesium, calcium, strontium and barium; an alkyl carbamoyl group such as carbamoyl group, methyl carbamoyl group, ethyl carbamoyl group and propyl carbamoyl group and; an alkyl sulfonyl group such as methane sulfonyl group and ethane sulfonyl group. In view of the polymerization reaction, hydrogen atom, potassium atom or propyl carbamoyl group may be preferable.

The dihalo-aromatic compounds utilized in this invention may be those represented by the general formula (7).
In the general formula (7), Ar₁ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group. The concrete examples are identical to those listed as Ar₁ in the general formula (1).

In the general formula (7), X may be a halogen atom such as fluorine, chlorine, bromine, and iodine. In view of polymerization, fluorine and chlorine may be preferable.

The dihydroxy-aromatic compounds utilized in this invention are those represented by the general formula (8).

In the general formula (8), Ar₂ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group. The concrete examples are identical to those listed as Ar₂ in the general formula (1).

The polycondensation reaction may be performed in a polar aprotic solvent. The polar aprotic solvent may preferably be dimethyl sulfoxide, sulfolane, pyridine, N-methyl pyrrolidone, N-cyclohexyl pyrrolidone, N,N-dimethyl formamide and N,N-dimethyl acetamide. However, the polar aprotic solvents are not limited to those listed above. In particular, N,N-dimethyl acetamide and dimethyl sulfoxide may be the most preferred. Two or more of the polar aprotic solvents may be mixed and utilized.

A non-polar solvent, an aliphatic solvent, an alicyclic solvent, or preferably an aromatic solvent such as toluene, xylene, chlorobenzene or o-dichlorobenzene may be mixed with the polar aprotic solvent and utilized. In this case, the ratio of the polar aprotic solvent may preferably be not lower than 50% by volume.

A basic catalyst may be added into the polycondensation reaction. The basic catalyst may preferably be carbonates such as lithium carbonate, sodium carbonate, sodium hydrogen carbonate, potassium carbonate, potassium hydrogen carbonate, caesium carbonate, magnesium carbonate and calcium carbonate; metal hydrides such as lithium hydride, sodium hydroxide and potassium hydroxide; and phosphates such as sodium phosphate, sodium hydrogen phosphate, sodium dihydrogen phosphate, potassium phosphate, potassium hydrogen phosphate and potassium dihydrogen phosphate. However, the basic catalysts are not limited to those listed above. In particular, potassium carbonate may be the most preferred.

The amount of the basic catalyst depends on the amount of dihydroxy-aromatic compound to be reacted. In the case of carbonate catalyst, the amount of catalyst utilized may preferably be not lower than the amount of OH group existing in the reaction mixture. Utilization of 1.2 folds of excess catalyst may be the most preferred.

The temperature of reaction may be 50 to 300°C, the most preferably 100 to 200°C. The selected temperature of the reaction should accommodate to the boiling point of the solvent utilized (or mixture of the solvents), the temperature may be above the boiling point under increased pressure using a autoclave.

### (Electrolyte membrane)

The electrolyte membrane according to this invention may comprise a polymeric material containing said sulfonated aromatic polyether as the main component. That is, the electrolyte membrane according to this invention can be produced from the polymeric material using a proper method for membrane-production. The method for production of membrane used for the polymeric material is not particularly limited, and a conventional method utilized in this art may be adopted, for example, a cast method that casts a solution onto a flat plate; a method comprising application of a solution onto a flat plate by a coater; and a method comprising drawing a melted polymeric material. As a component of the polymeric material, said sulfonated aromatic polyether may be used solely, or it may be mixed with other polymeric electrolytes.

As described above, in the structure of the sulfonated aromatic polyether and the electrolyte membrane according to this invention, the introduction of sulfonic acid groups is limited to the fluorenyl group in the side chain, and there are many advantages owing to the structure. In concrete, the region proximal to the main chain of the polyether is maintained to be hydrophobic, therefore, sulfonated aromatic polyether according to this invention is superior on oxidative and hydrolytic stability.

Until now, a hydrocarbon-type electrolyte that can bear oxidation by radicals or nucleophilic reaction by water molecules has not been obtained yet. In the conventional hydrocarbon-type electrolyte, hydrophilic ionic groups are bonded to the main chain of the polymer. Moreover, synthesis of a structure in which binding of the ionic groups are limited to the side chain has been difficult. According to this invention, the ionic groups can be introduced into fluorene in the side chain exclusively, by regulating the site of introduction of the sulfonic acid groups. Therefore, a membrane having superior property on oxidative and hydrolytic stability could be achieved, despite that it is a hydrocarbon-type membrane.

Moreover, according to this invention, a bulky fluorenyl group is introduced and a space available to retain water molecule can be formed, therefore, a high proton conductivity can be achieved. Compared with a perfluorinated electrolyte membrane, an electrolyte composed of a hydrocarbon backbone generally has low acidity, which causes low proton conductivity. Therefore, increase in the number of introduced acidic groups is needed to improve proton conductivity, however, it results in decreased water resistance. Nonetheless, the polyether electrolyte according to this invention has a space for enclosing water molecules which is formed by the fluorene backbone. It results in increased dissociation of the acidic groups and assures conductive pathway of the proton, then the membrane according to this invention exhibits a high proton conductivity compared with a fluorine electrolyte membrane. Moreover, because of said water molecule enclosing effect, the water molecules hardly escape in vapor, then it is advantageous in that the conductivity does not decrease even above 100°C.

Until now, there have been some successful examples that achieved higher ion conductivity and mechanical strength, compared with nafion membrane. However, there has been no successful example that satisfies many requirements such as resistance against acidic decomposition and superior ion conductivity under low humidity. A "reinforcing membrane" has been glued together to reinforce the strength and a "moisturizing material" has been added and mixed to achieve ion conductivity under the condition of low humidity. Despite of it, such procedures are mere additional measures. The measures may make the membrane-producing method complicated meaninglessly and may cause evaporation. In addition, the prices of membranes may be raised for such measures.

In the membrane according to this invention, the aromatic polyether may be selected from a wide range, and a material monomer of low cost may be selected as needed for co-polymerization, otherwise, a polymer may be chosen to achieve sulfonation. Therefore, the membrane-producing method itself is easy and simple. As a result, the cost for production of the membrane can be kept not higher than 1500 yen/m².

### EXAMPLE

Hereafter, this invention is explained in detail according to the Examples, however, the range of this invention is not to be limited within the descriptions.

### (Reference 1)

### [Production of aromatic polyether]

Into a 100ml three-neck flask equipped with a mercurial thermometer attached with a seal, a nitrogen inlet and a reflux condenser, 0.35g (1.0mmol) of 9,9-bis(4-hydroxyphenyl)fluorene (Tolyo kasei), 0.25g (1.0mmol) of 4-fluorophenyl sulfone (ACROS), 0.35g (2.5mmol) of potassium carbonate (Kanto kagaku) and 3mL of dehydrated N,N-dimethylacetamide (DMAc, Kanto kagaku) were added. The mixture was mixed under atmospheric pressure of nitrogen gas, then a clear and uniform solution was obtained. The solution was heated at 140°C for 3 hours, then at 165°C for 3 hours. After the reaction, 6mL of DMAc was added and cooled to room temperature, then the reaction solution was slowly dropped into 300ml of purified water. The obtained precipitate was recovered by vacuum filtration, washed with purified water at 80°C for 3 hours, then washed with methanol, and vacuum dried at 60°C for 15 hours. As a result, 0.55g of aromatic polyether with white fibrous form was obtained.

### (Reference 2)

### [Production of aromatic polyether]

Into a 100ml three-neck flask equipped with a mercurial thermometer attached with a seal, a nitrogen inlet and a reflux condenser, 0.18g (0.5mmol) of 9,9-bis(4-hydroxyphenyl)fluorene (Tolyo kasei), 0.11g (0.5mmol) of bisphenol A (Kanto kagaku), 0.25g (1.0mmol) of 4-fluorophenyl sulfone (ACROS), 0.35g (2.5mmol) of potassium carbonate (Kanto kagaku) and 3mL of dehydrated N,N-dimethylacetamide (DMAc, Kanto kagaku) were added. The mixture was mixed under atmospheric pressure of nitrogen gas, then a clear and uniform solution was obtained. The solution was heated at 140°C for 3 hours , then at 165°C for 3 hours. After the reaction, 6mL of DMAc was added and cooled to room temperature, then the reaction solution was slowly dropped into 300ml of purified water. The obtained precipitate was recovered by vacuum filtration, washed with purified water at 80°C for three hours, then washed with methanol, and vacuum dried at 60°C for 15 hours. As a result, 0.49g of aromatic polyether with white fibrous form was obtained.

### (Examples 1 to 3)

### [Sulfonation of aromatic polyether]

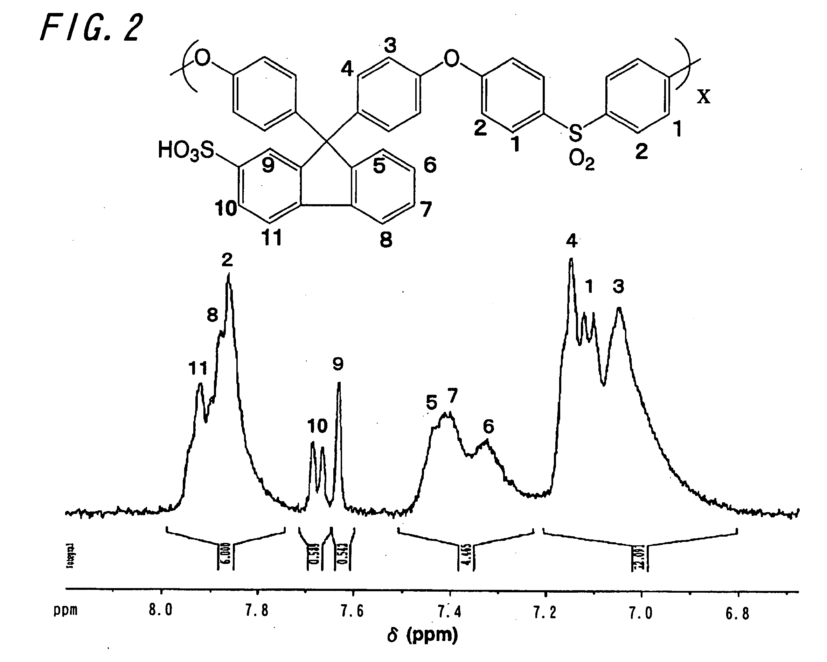

The aromatic polyether (0.30g, 0.5mmol) obtained in the Reference 1 was dissolved into 50mL of dehydrated dichloromethane (Kanto kagaku) and poured into a dropping funnel. Five mL of 0.1M chlorosulfuric acid solution in dichloromethane was poured into a 100ml flask (Example 1). Said aromatic polyether solution was dropped off by a dropping funnel, and precipitate with weak red color was obtained. The reaction was performed for 3 hours at room temperature with stirring. After the reaction, the reaction solution was dropped off into a hexane solution, the precipitate obtained was recovered by vacuum filtration. It was washed well with hexane, vacuum dried at 80°C for 15 hours, and sulfonated aromatic polyether with white peach color was obtained. The ¹H-NMR spectrum of this compound is shown in Fig.2. From the integrated value of the ¹H-NMR spectrum, it was confirmed that 0.28 equivalent of sulfonic acid group was introduced per one equivalent of fluorenyl group (sulfonated ratio 28%, ion exchange capacity 0.92meq/g). Moreover, using the same procedure described above, sulfonation was performed using 7.5 mL and 15 mL of 0.1M chlorosulfuric acid solution in dichloromethane, respectively (Example 2 sulfonated ratio 35%, ion exchange capacity 1.14meq/g; Example 3 sulfonated ratio 64%, ion exchange capacity 1.92meq/g).

### (Examples 4 to 7)

### [Sulfonation of aromatic polyether]

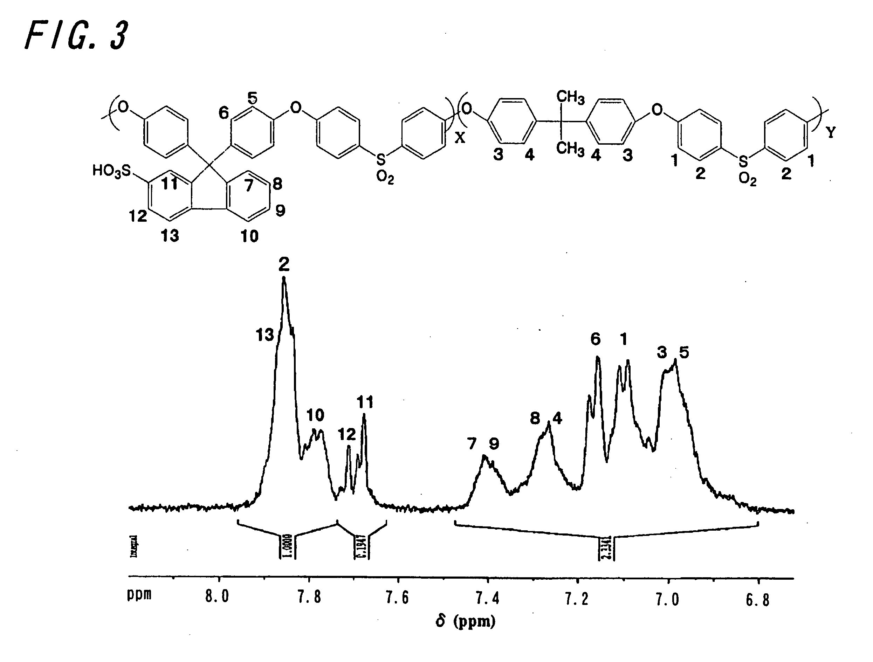

The aromatic polyether obtained in the Reference 2 was dissolved into 50mL of dehydrated dichloromethane (Kanto kagaku) and poured into a 100ml flask. Ten mL of 0.1M chlorosulfuric acid solution in dichloromethane was poured into a dropping funnel. Chlorosulfuric acid solution was dropped into said aromatic polyether solution, and a precipitate with weak red color was obtained. The reaction was performed at 40°C for 5 hours with stirring. After the reaction, the reaction solution was dropped off into a hexane solution, the precipitate obtained was recovered by vacuum filtration. It was washed well with hexane, vacuum dried at 80°C for 15 hours, and sulfonated aromatic polyether with white peach color was obtained (Example 4). The ¹H-NMR spectrum of this compound is shown in Fig.3. From the integrated value of the ¹H-NMR spectrum, it was confirmed that 0.15 equivalent of sulfonic acid group was introduced per one equivalent of fluorenyl group (sulfonated ratio 15%, ion exchange capacity 0.57meq/g). Moreover, using the same procedure described above, sulfonation was performed using 15 mL, 20 mL and 30 mL of 0.1M chlorosulfuric acid solution in dichloromethane, respectively (Example 5 sulfonated ratio 25%, ion exchange capacity 0.92meq/g; Example 6 sulfonated ratio 38%, ion exchange capacity 1.35meq/g; Example 7 sulfonated ratio 53%, ion exchange capacity 1.71meq/g).

### (Examples 8)

### [Production of sulfonated aromatic polyether]

Into a 100ml three-neck flask equipped with a mercurial thermometer attached with a seal, a nitrogen inlet and a reflux condenser, 0.35g (0.5mmol) of 9,9-bis(4-hydroxyphenyl)-2.7-disulfofluorene, 0.1g (0.5mmol) of bisphenol A, 0.25g (1.0mmol) of 4-fluorophenyl sulfone, 1.3g (4.0mmol) of caesium carbonate (Aldrich), 5mL of dehydrated N-dimethylpyrrolidone (NMP Kanto kagaku), 0.8mL of toluene (Kanto kagaku) were added and dissolved. The dissolution of the monomer was confirmed, heated to 200° C and reacted for 21 hours. After completion of the reaction, 10 mL of NMP was added and cooled to room temperature, and the reaction solution was dropped off into methanol containing 1% hydrochloric acid. The obtained precipitate was recovered by vacuum filtration, washed with methanol, then it was vacuum dried at 60°C for 15 hours. As a result, 0.65g of sulfonated aromatic polyether with pale brown color was obtained (ion exchange capacity 1.55meq/g).

### (Preparation of electrolyte membrane)

Preparation of membrane was performed using a method of casting solution. Said sulfonated aromatic polyether was dissolved into N,N-dimethylacetamide to make a concentration of 3wt% The solution was casted on a glass plate. It was dried under atmospheric pressure at 60°C for 12 hours, then it was further vacuum dried at 80°C for 12 hours, and a membrane was obtained. The membrane was immersed into a solution of 1N nitric acid for 12 hours (acid treatment process). The acid treatment process was further repeated twice. Then the membrane was washed with purified water at 60°C, and it was vacuum dried at 80°C for 15 hours to obtain an electrolyte membrane. It was used as a test sample for each test.

### (Oxidative stability)

Each sample was heated at 80°C in Fenton's reagent (3% hydrogen peroxide solution containing 2ppm ferrous sulfate). The appearance of the test sample was observed with time. The time points at which the sample membrane began to dissolve and at which the sample membrane dissolved completely were recorded.

### (Hydrolytic resistance)

Each test sample was left at 140°C for 24 hours under the atmosphere of 100% relative humidity. The alteration of molecular weights was observed for the test samples. The molecular weights were represented by weight-average molecular weights (Mw) measured by GPC method, as the values calibrated with standard polystyrene samples.

### (Measurement of proton conductivity)

Each test sample was cut off at the size of 5 x 40 mm, and the alternating impedance was measured by a four probe method. The measurement was performed at 80°C and 120°C at 100% relative humidity, and the conditions of constant current of 0.005mA and sweep frequency of 10 to 20,000Hz were utilized. The proton conductivity was calculated from the obtained value of impedance, the distance between the probes (10nm) and the thickness of the membrane (30 µm).

**Table 1**

| | Ion exchange capacity (meq/g) | Oxidative Resistance | | Hydrolytic stability | | Proton conductivity | |
|---|---|---|---|---|---|---|---|
| | | Beginning of dissolution (min) | Completion of dissolution (mm) | Before subjecting to test Mw (10³) | After subjecting to test Mw (10³) | 80°C (S/cm) | 120°C (S/cm) |
| Example 1 | 0.92 | 60 | 125 | 1068 | 1068 | 0.15 | 0.38 |
| Example 2 | 1.14 | 35 | 80 | 1590 | 1590 | 0.16 | 0.45 |
| Example 3 | 1.92 | 30 | 60 | 1480 | 1279 | 0.33 | 0.59 |
| Example 4 | 0.57 | 80 | 220 | 291 | 291 | 0.08 | 0.06 |
| Example 5 | 0.92 | 55 | 120 | 303 | 303 | 0.13 | 0.10 |
| Example 6 | 1.35 | 35 | 75 | 308 | 308 | 0.16 | 0.14 |
| Example 7 | 1.71 | 15 | 30 | 384 | 383 | 0.31 | 0.28 |
| Example 8 | 1.55 | 35 | 60 | 211 | 211 | 0.18 | 0.17 |

By regulating the reaction for introduction of sulfonic acid group, the ion exchange capacity was regulated in the range of 0.57 to 1.92meq/g. Then an electrolyte membrane which was stable at least 15 minutes in Fenton's reagent (in many cases more than 30 minutes), was achieved by this invention. Moreover, the membrane did not exhibit any alteration in the molecular weight when left for 24 hours under the conditions of 140°C and 100% relative humidity.

With the value of ion exchange capacity became higher, the value of proton conductivity also became higher. Especially, when the ion exchange capacity was higher than 0.92 meq/g, the proton conductivity exhibited a value higher than 0.1 S/cm.

### (Comparative example)

According to the previous report (JP 2003-147074), a copolymerized aromatic polyether was obtained from 9,9-bis(4-hydroxyphenyl)fluorene, bis(4-hydroxyphenyl) sulfone and 4,4'-difluorodiphenyl sulfone, which was then sulfonated to prepare an electrolyte. As to the electrolyte, it was shown that sulfonic acid groups were introduced into not only fluorenyl group, but also into aromatic rings in the main chain which was bonded to the oxygen atom of ether. That is, in the sulfonated and copolymerized aromatic polyether described in JP 2003-147074 is, different from the sulfonated aromatic polyether according to this invention, introduction of sulfonic acid groups was not limited to the fluorenyl group in the side chain as shown in the NMR spectrum data. Moreover, in JP 2003-147074, the electrolyte membrane was immersed into water at 65°C for 3 days. The shape of the membrane was visually observed, which was revealed to be stable. However, in the conditions adopted in JP 2003-147074, the solution was neutral and the temperature was not extremely high. In short, the condition adopted in JP 2003-147074 was very mild compared with that adopted in the Examples of present invention, i.e. condition for oxidative stability (3% hydrogen peroxide solution containing 2ppm ferrous sulfate, 80°C) and hydrolytic stability (atmosphere of 100% relative humidity, 140°C). The test sample produced according to Example 1 of JP 2003-147074 dissolved into water under room temperature, and the membrane was disrupted completely under the condition of atmosphere of 100% relative humidity and 140°C. In other word, it is obvious that the test samples described in the Examples of this invention can bear severer condition, compared to the test samples described in JP 2003-147074. Moreover, it is reported that the test sample described in JP 2003-147074 exhibits the proton conductivity of 0.21 S/cm under the condition of 80°C and 95% relative humidity (JP 2003-147074, Table 1). The proton conductivity of the sulfonated aromatic polyether according to this Example exhibits a value of twice or higher compared with the value of the test sample described in JP 2003-147074, under a condition of higher temperature (120°C, 100% relative humidity).

As mentioned above, it was revealed that the sulfonated aromatic polyether according to this Example has superior properties on all of oxidative and hydrolytic stability, and proton conductivity.

For the sulfonic acid groups were introduced into the fluorenyl groups in the side chain of the aromatic ether exclusively, it is assumed that improvement in proton conductivity at a temperature 100°C or higher and improvement in oxidative and hydrolytic stability can be achieved without losing proton conductivity.

### (Industrial availability)

This invention provided a sulfonated aromatic polyether having the sulfonic acid groups in the fluorenyl groups of the side chain exclusively, by sulfonation of a material polymer having a function as needed, or by copolymerization of the sulfonated monomers. The sulfonated aromatic polyether according to this invention realized superior properties and durability compared with conventional membranes, therefore, it is useful as a material for a proton conductive membrane utilized in proton-exchange membrane fuel cell.

## Claims

1. A sulfonated aromatic polyether **characterized in that** the fundamental backbone is represented by the general formula (1); 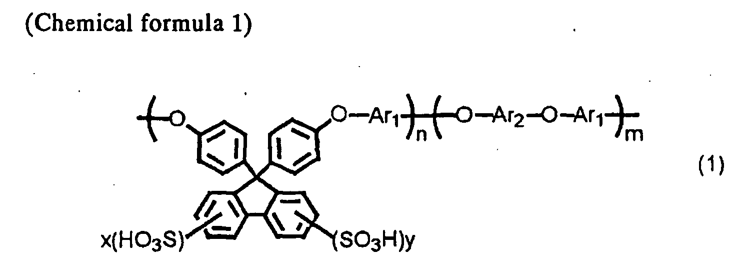 wherein (in the general formula (1)) Ar₁ and Ar₂ are C₆₋₂₀ groups containing aromatic ring(s) each of which is selected independently, the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group;
wherein (in the general formula (1)) x and y are each integer of 0 to 3 which represent the degree of sulfonation, with the proviso that the case where both of x and y are simultaneously 0 is excluded, and n and m are each an integer of not lower than 2 which represent the degree of polymerization.

2. The sulfonated aromatic polyether according to Claim 1 **characterized in that** the fundamental backbone is represented by the general formula (2); 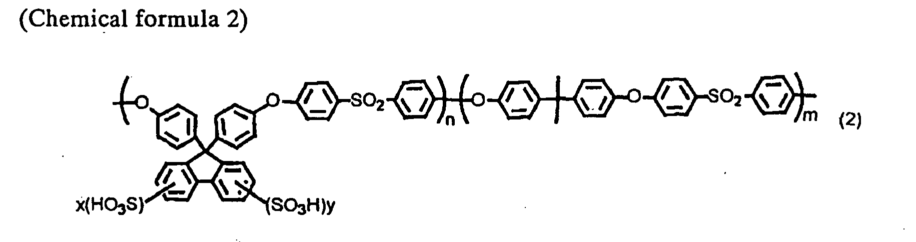 wherein (in the general formula (2)) x and y are each integer of 0 to 3 which represent the degree of sulfonation, with the proviso that the case where both of x and y are simultaneously 0 is excluded, and n and m are each an integer of not lower than 2 which represent the degree of polymerization.

3. A sulfonated aromatic polyether **characterized in that** the fundamental backbone is represented by the general formula (3); 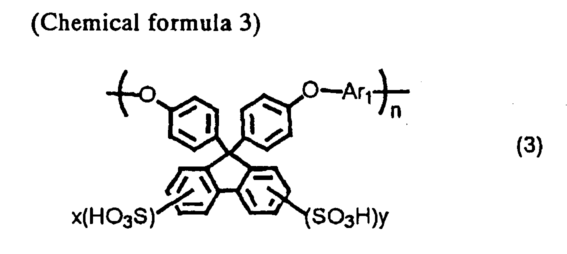 wherein (in the general formula (3)) Ar₁ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group;
wherein (in the general formula (3)) x and y are each integer of 0 to 3 which represent the degree of sulfonation, with the proviso that the case where both of x and y are simultaneously 0 is excluded, and n is an integer of not lower than 2 which represent the degree of polymerization.

4. The sulfonated aromatic polyether according to Claim 3 **characterized in that** the fundamental backbone is represented by the general formula (4); 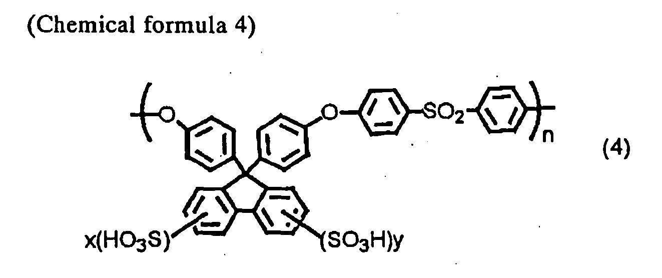 wherein (in the general formula (4)) x and y are each integer of 0 to 3 which represent the degree of sulfonation, with the proviso that the case where both of x and y are simultaneously 0 is excluded, and n is an integer of not lower than 2 which represent the degree of polymerization.

5. A method for production of a sulfonated aromatic polyether according to Claim 1 **characterized in that** the fluorenyl groups in the side chain of the aromatic polyether represented by the general formula (5) are selectively sulfonated; 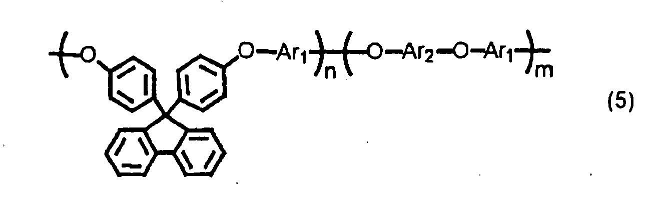 wherein (in the general formula (5)) Ar₁ and Ar₂ are C₆₋₂₀ groups containing aromatic ring(s) each of which is selected independently, the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group;
wherein (in the general formula (5)) n and m are each an integer of not lower than 2 which represent the degree of polymerization.

6. A method for production of a sulfonated aromatic polyether according to Claim 1 **characterized in that** the fluorenyl groups in the side chain of the aromatic polyester are selectively sulfonated, the method comprising the step of polycondensation of the following compounds;
a sulfonated fluorenyl diphenol compound represented by the general formula (6) ; 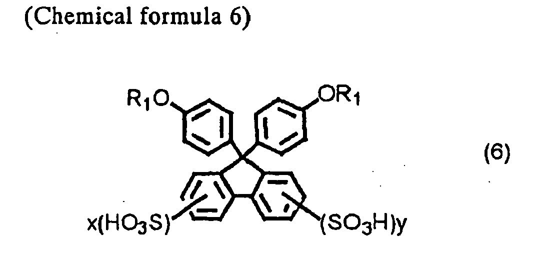 wherein (in the general formula (6)) x and y are each integer of 0 to 3 which represent the degree of sulfonation, with the proviso that the case where both of x and y are simultaneously 0 is excluded, and R₁ is selected from a hydrogen atom, an alkaline metal atom, an alkaline earth metal atom, an alkyl carbamoyl group, and an alkyl sulfonyl group, and
a dihalo-aromatic compound represented by the general formula (7);
(Chemical formula 7) X-Ar₁-X (7)
wherein (in the general formula (7)) Ar₁ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group, and X is a halogen atom such as fluorine, chlorine, bromine and iodine, and
a dihydroxy-aromatic compound represented by the general formula (8) ;
(Chemical formula 8) HO-Ar₂-OH (8)
wherein (in the general formula (8)) Ar₂ is a C₆₋₂₀ group containing aromatic ring(s), the group containing aromatic ring(s) may contain aromatic ring(s) selected from phenylene group and naphthylene group, and the plural phenylene groups may be bonded to each other via a heteroatom such as N, O, S, a ketone group, a sulfone group or an aliphatic group in the group containing aromatic ring(s), or the hydrogen atoms in the aromatic ring may be partially substituted with an aliphatic group, a halogen atom, a perfluorinated aliphatic group or a sulfonic acid group.

7. An electrolyte membrane **characterized in that** the electrolyte membrane is obtained by preparing a membrane from the sulfonated aromatic polyether according to any one of Claim 1 to Claim 4.

## Patentansprüche

1. Sulfonierter aromatischer Polyether, **dadurch gekennzeichnet, dass** das grundlegende Rückgrat durch die allgemeine Formel (1) dargestellt ist; 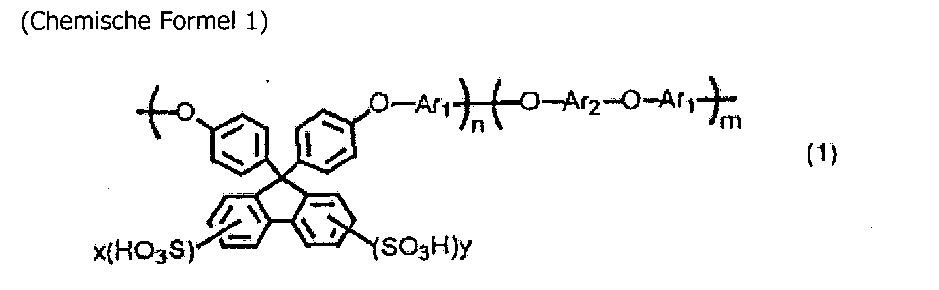 wobei (in der allgemeinen Formel (1)) Ar₁ und Ar₂ C₆₋₂₀-Gruppen sind, die (einen) aromatische(n) Ring(e) enthalten, der/die jeweils unabhängig ausgewählt ist/sind,
die Gruppe, die (einen) aromatische(n) Ring(e) enthält, kann (einen) aromatische(n) Ring(e) ausgewählt aus einer Phenylengruppe und einer Naphthylengruppe enthalten, und die mehreren Phenylengruppen können miteinander über ein Heteroatom wie N, O, S, eine Ketongruppe, eine Sulfongruppe oder eine aliphatischen Gruppe in der Gruppe, die (einen) aromatische(n) Ring(e) enthält, verbunden sein, oder die Wasserstoffatome in dem aromatischen Ring können teilweise durch eine aliphatische Gruppe, ein Halogenatom, eine perfluorierten aliphatischen Gruppe oder eine Sulfonsäuregruppe substituiert sein;
wobei (in der allgemeinen Formel (1)) x und y jeweils ganze Zahlen von 0 bis 3 sind, die den Sulfonierungsgrad darstellen, unter der Bedingung, dass der Fall, in dem sowohl x und y gleichzeitig 0 sind, ausgeschlossen ist, und n und m jeweils eine ganze Zahl von nicht unter 2 sind, die den Polymerisationsgrad darstellen.

2. Sulfonierter aromatischer Polyether nach Anspruch 1, **dadurch gekennzeichnet, dass** das grundlegende Rückgrat durch die allgemeine Formel (2) dargestellt ist; 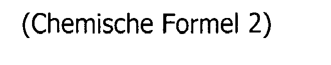 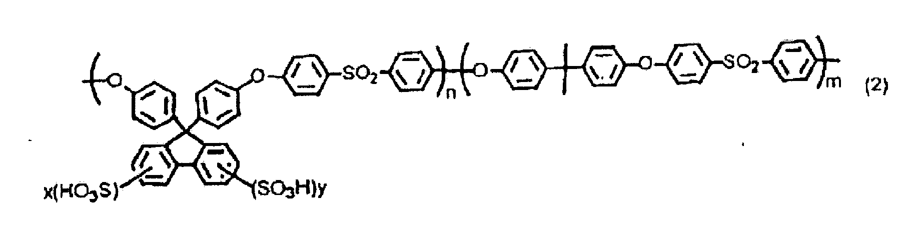 wobei (in der allgemeinen Formel (2)) x und y jeweils ganze Zahlen von 0 bis 3 sind, die den Sulfonierungsgrad darstellen, unter der Bedingung, dass der Fall, in dem sowohl x und y gleichzeitig 0 sind, ausgeschlossen ist, und n und m jeweils eine ganze Zahl von nicht unter 2 sind, die den Polymerisationsgrad darstellen.

3. Sulfonierter aromatischer Polyether, **dadurch gekennzeichnet, dass** das grundlegende Rückgrat durch die allgemeine Formel (3) dargestellt ist; 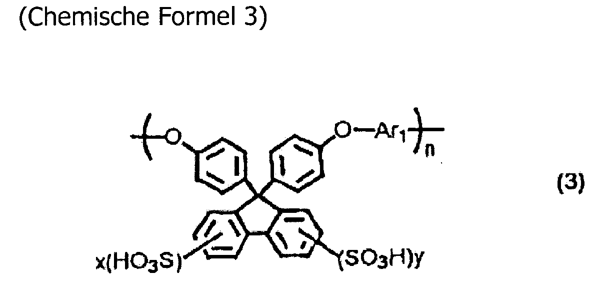 wobei (in der allgemeinen Formel (3)) Ar₁ eine C₆₋₂₀-Gruppe ist, die (einen) aromatische(n) Ring(e) enthält, die Gruppe, die (einen) aromatische(n) Ring(e) enthält, kann (einen) aromatische(n) Ring(e) ausgewählt aus einer Phenylengruppe und einer Naphthylengruppe enthalten, und die mehreren Phenylengruppen können miteinander über ein Heteroatom wie N, O, S, eine Ketongruppe, eine Sulfongruppe oder eine aliphatischen Gruppe in der Gruppe, die (einen) aromatische(n) Ring(e) enthält, verbunden sein, oder die Wasserstoffatome in dem aromatischen Ring können teilweise durch eine aliphatische Gruppe, ein Halogenatom, eine perfluorierten aliphatischen Gruppe oder eine Sulfonsäuregruppe substituiert sein;
wobei (in der allgemeinen Formel (3)) x und y jeweils ganze Zahlen von 0 bis 3 sind, die den Sulfonierungsgrad darstellen, unter der Bedingung, dass der Fall, in dem sowohl x und y gleichzeitig 0 sind, ausgeschlossen ist, und n eine ganze Zahl von nicht unter 2 ist, die den Polymerisationsgrad darstellt.

4. Sulfonierter aromatischer Polyether nach Anspruch 3, **dadurch gekennzeichnet, dass** das grundlegende Rückgrat durch die allgemeine Formel (4) dargestellt ist; 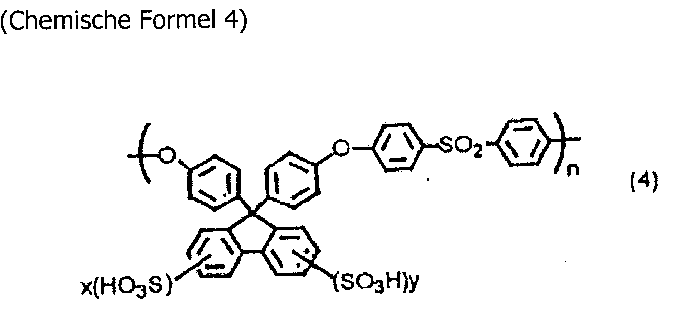 wobei (in der allgemeinen Formel (4)) x und y jeweils ganze Zahlen von 0 bis 3 sind, die den Sulfonierungsgrad darstellen, unter der Bedingung, dass der Fall, in dem sowohl x und y gleichzeitig 0 sind, ausgeschlossen ist, und n eine ganze Zahl von nicht unter 2 ist, die den Polymerisationsgrad darstellt.

5. Verfahren zur Herstellung eines sulfonierten aromatischen Polyethers nach Anspruch 1, **dadurch gekennzeichnet dass** die Fluorenylgruppen in den Seitenketten des aromatischen Polyethers, die durch die allgemeine Formel (5) dargestellt sind, selektiv sulfoniert sind; 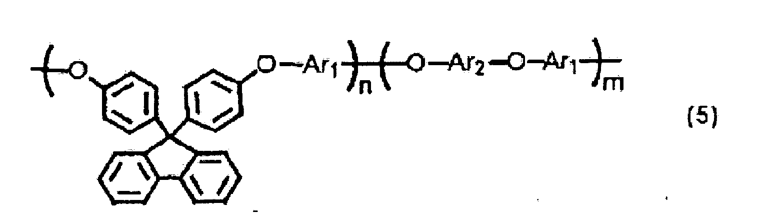 wobei (in der allgemeinen Formel (5)) Ar₁ und Ar₂ C₆₋₂₀-Gruppen sind, die (einen) aromatische(n) Ring(e) enthalten, der/die jeweils unabhängig ausgewählt ist/sind,
die Gruppe, die (einen) aromatische(n) Ring(e) enthält, kann (einen) aromatische(n) Ring(e) ausgewählt aus einer Phenylengruppe und einer Naphthylengruppe enthalten, und die mehreren Phenylengruppen können miteinander über ein Heteroatom wie N, O, S, eine Ketongruppe, eine Sulfongruppe oder eine aliphatischen Gruppe in der Gruppe, die (einen) aromatische(n) Ring(e) enthält, verbunden sein, oder die Wasserstoffatome in dem aromatischen Ring können teilweise durch eine aliphatische Gruppe, ein Halogenatom, eine perfluorierten aliphatischen Gruppe oder eine Sulfonsäuregruppe substituiert sein;
wobei (in der allgemeinen Formel (5)) n und m jeweils eine ganze Zahl von nicht unter 2 sind, die den Polymerisationsgrad darstellen.

6. Verfahren zur Herstellung eines sulfonierten aromatischen Polyethers nach Anspruch 1, **dadurch gekennzeichnet, dass** die Fluorenylgruppen in den Seitenketten des aromatischen Polyethers selektiv sulfoniert sind, wobei das Verfahren den Schritt des Polykondensierens der folgenden Verbindungen umfasst;
einer sulfonierten Fluorenyldiphenol-Verbindung, dargestellt durch die allgemeine Formel (6); 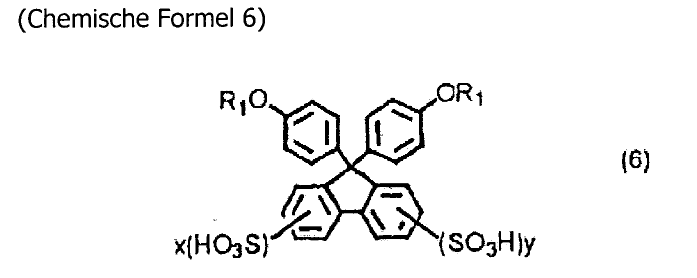 wobei (in der allgemeinen Formel (6)) x und y jeweils ganze Zahlen von 0 bis 3 sind, die den Sulfonierungsgrad darstellen, unter der Bedingung, dass der Fall, in dem sowohl x und y gleichzeitig 0 sind, ausgeschlossen ist, und R₁ ausgewählt ist aus einem Wasserstoffatom, einem Alkalimetallatom, einem Erdalkalimetallatom einer Alkylcarbamoylgruppe und einer Alkylsulfonylgruppe, und
einer Dihalo-aromatischen Verbindung, dargestellt durch die allgemeinen Formel (7);
(Chemische Formel 7) X-Ar₁-X (7)
wobei (in der allgemeinen Formel (7)) Ar₁ eine C₆₋₂₀-Gruppe ist, die (einen) aromatische(n) Ring(e) enthält, die Gruppe, die (einen) aromatische(n) Ring(e) enthält, kann (einen) aromatische(n) Ring(e) ausgewählt aus einer Phenylengruppe und einer Naphthylengruppe enthalten, und die mehreren Phenylengruppen können miteinander über ein Heteroatom wie N, O, S, eine Ketongruppe, eine Sulfongruppe oder eine aliphatischen Gruppe in der Gruppe, die (einen) aromatische(n) Ring(e) enthält, verbunden sein, oder die Wasserstoffatome in dem aromatischen Ring können teilweise durch eine aliphatische Gruppe, ein Halogenatom, eine perfluorierten aliphatischen Gruppe oder eine Sulfonsäuregruppe substituiert sein, und X ein Halogenatom wie Fluor, Chlor, Brom oder Jod ist, und
einer Dihydroxy-aromatischen Verbindung, dargestellt durch die allgemeine Formel (8);
(Chemische Formel 8) HO-Ar₂-OH (8)
wobei (in der allgemeinen Formel (8)) Ar₂ eine C₆₋₂₀-Gruppe ist, die (einen) aromatische(n) Ring(e) enthält, die Gruppe, die (einen) aromatische(n) Ring(e) enthält, kann (einen) aromatische(n) Ring(e) ausgewählt aus einer Phenylengruppe und einer Naphthylengruppe enthalten, und die mehreren Phenylengruppen können miteinander über ein Heteroatom wie N, O, S, eine Ketongruppe, eine Sulfongruppe oder eine aliphatischen Gruppe in der Gruppe, die (einen) aromatische(n) Ring(e) enthält, verbunden sein, oder die Wasserstoffatome in dem aromatischen Ring können teilweise durch eine aliphatische Gruppe, ein Halogenatom, eine perfluorierten aliphatischen Gruppe oder eine Sulfonsäuregruppe substituiert sein.

7. Elektrolytmembran, **dadurch gekennzeichnet, dass** die Elektrolytmembran erhältlich ist durch Anfertigen einer Membran aus dem sulfonierten aromatischem Polyether nach einem der Ansprüche 1 bis 4.

## Revendications

1. Polyéther aromatique sulfoné **caractérisé en ce que** le squelette fondamental est représenté par la formule générale (1) ; 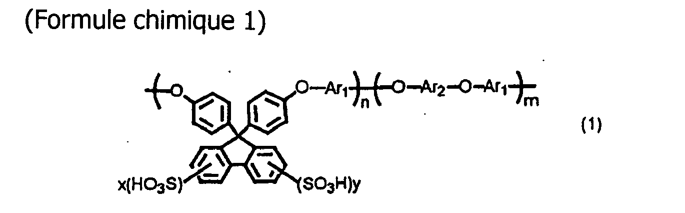 dans lequel (dans la formule générale (1)) Ar₁ et Ar₂ sont des groupes en C₆-C₂₀ contenant un (des) cycle(s) aromatique(s) chacun desquels est choisi indépendamment, le groupe contenant un (des) cycle(s) aromatique(s) peut contenir un (des) cycle(s) aromatique(s) choisi(s) parmi un groupe phénylène et un groupe naphtylène, et les groupes phénylène multiples peuvent être liés les uns aux autres par l'intermédiaire d'un hétéroatome tel que N, O, S, un groupe cétone, un groupe sulfone ou un groupe aliphatique dans le groupe contenant un (des) cycle(s) aromatique(s), ou bien les atomes d'hydrogène dans le cycle aromatique peuvent être partiellement substitués avec un groupe aliphatique, un atome d'halogène, un groupe aliphatique perfluoré ou un groupe acide sulfonique ;
dans lequel (dans la formule générale (1)) x et y sont chacun un entier de 0 à 3 qui représentent le degré de sulfonation, sous réserve que le cas où x et y sont tous les deux simultanément 0 est exclus, et n et m sont chacun un entier de pas moins de 2 qui représentent le degré de polymérisation.

2. Polyéther aromatique sulfoné selon la revendication 1, **caractérisé en ce que** le squelette fondamental est représenté par la formule générale (2) ; 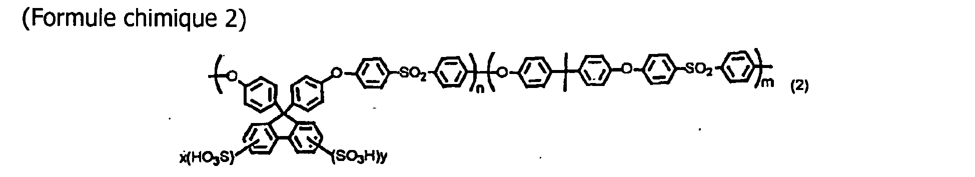 dans lequel (dans la formule générale (2)) x et y sont chacun un entier de 0 à 3 qui représentent le degré de sulfonation, sous réserve que le cas où x et y sont tous les deux simultanément 0 est exclus, et n et m sont chacun un entier de pas moins de 2 qui représentent le degré de polymérisation.

3. Polyéther aromatique sulfoné **caractérisé en ce que** le squelette fondamental est représenté par la formule générale (3) ; 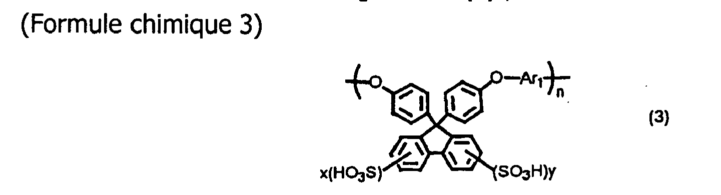 dans lequel (dans la formule générale (3)) Ar₁ est un groupe en C₆-C₂₀ contenant un (des) cycle(s) aromatique(s), le groupe contenant un (des) cycle(s) aromatique(s) peut contenir un (des) cycle(s) aromatique(s) choisi(s) parmi un groupe phénylène et un groupe naphtylène, et les groupes phénylène multiples peuvent être liés les uns aux autres par l'intermédiaire d'un hétéroatome tel que N, O, S, un groupe cétone, un groupe sulfone ou un groupe aliphatique dans le groupe contenant un (des) cycle(s) aromatique(s), ou bien les atomes d'hydrogène dans le cycle aromatique peuvent être partiellement substitués avec un groupe aliphatique, un atome d'halogène, un groupe aliphatique perfluoré ou un groupe acide sulfonique ;
dans lequel (dans la formule générale (3)) x et y sont chacun un entier de 0 à 3 qui représentent le degré de sulfonation, sous réserve que le cas où x et y sont tous les deux simultanément 0 est exclus, et n est un entier de pas moins de 2 qui représente le degré de polymérisation.

4. Polyéther aromatique sulfoné selon la revendication 3, **caractérisé en ce que** le squelette fondamental est représenté par la formule générale (4) ; 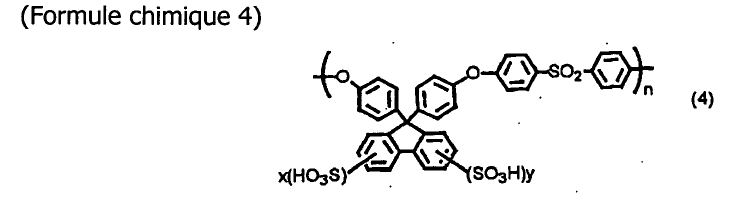 dans lequel (dans la formule générale (4)) x et y sont chacun un entier de 0 à 3 qui représentent le degré de sulfonation, sous réserve que le cas où x et y sont tous les deux simultanément 0 est exclus, et n est un entier de pas moins de 2 qui représente le degré de polymérisation.

5. Procédé de production d'un polyéther aromatique sulfoné selon la revendication 1, **caractérisé en ce que** les groupes fluorényle dans la chaîne latérale du polyéther aromatique représenté par la formule générale (5) sont sélectivement sulfonés ; 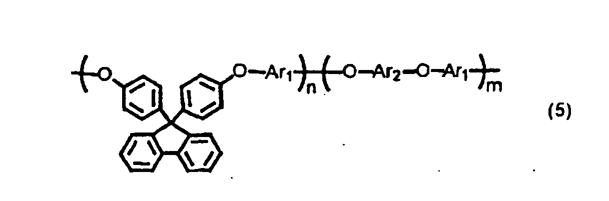 dans lequel (dans la formule générale (5)) Ar₁ et Ar₂ sont des groupes en C₆-C₂₀ contenant un (des) cycle(s) aromatique(s) chacun desquels est choisi indépendamment, le groupe contenant un (des) cycle(s) aromatique(s) peut contenir un (des) cycle(s) aromatique(s) choisi(s) parmi un groupe phénylène et un groupe naphtylène, et les groupes phénylène multiples peuvent être liés les uns aux autres par l'intermédiaire d'un hétéroatome tel que N, O, S, un groupe cétone, un groupe sulfone ou un groupe aliphatique dans le groupe contenant un (des) cycle(s) aromatique(s), ou bien les atomes d'hydrogène dans le cycle aromatique peuvent être partiellement substitués avec un groupe aliphatique, un atome d'halogène, un groupe aliphatique perfluoré ou un groupe acide sulfonique ;
dans lequel (dans la formule générale (5)) n et m sont chacun un entier de pas moins de 2 qui représentent le degré de polymérisation.

6. Procédé de production d'un polyéther aromatique sulfoné selon la revendication 1, **caractérisé en ce que** les groupes fluorényle dans la chaîne latérale du polyéther aromatique sont sélectivement sulfonés, le procédé comprenant l'étape de polycondensation des composés suivants ;
un composé fluorényl diphénol sulfoné représenté par la formule générale (6) ; 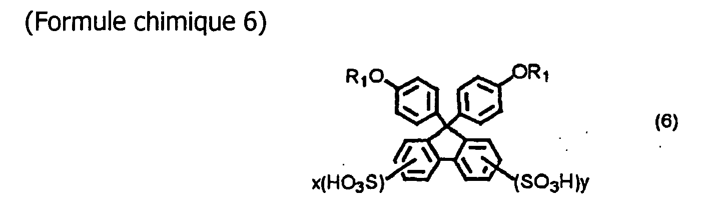 dans lequel (dans la formule générale (6)) x et y sont chacun un entier de 0 à 3 qui représentent le degré de sulfonation, sous réserve que le cas où x et y sont tous les deux simultanément 0 est exclus, et R₁ est choisi parmi un atome d'hydrogène, un atome d'un métal alcalin, un atome d'un métal alcalinoterreux, un groupe alkyl carbamoyle et un groupe alkyl sulfonyle, et
un composé dihalo-aromatique représenté par la formule générale (7) ;
(Formule chimique 7) X-Ar₁-X (7)
dans lequel (dans la formule générale (7)) Ar₁ est un groupe en C₆-C₂₀ contenant un (des) cycle(s) aromatique(s), le groupe contenant un (des) cycle(s) aromatique(s) peut contenir un (des) cycle(s) aromatique(s) choisi(s) parmi un groupe phénylène et un groupe naphtylène, et les groupes phénylène multiples peuvent être liés les uns aux autres par l'intermédiaire d'un hétéroatome tel que N, O, S, un groupe cétone, un groupe sulfone ou un groupe aliphatique dans le groupe contenant un (des) cycle(s) aromatique(s), ou bien les atomes d'hydrogène dans le cycle aromatique peuvent être partiellement substitués avec un groupe aliphatique, un atome d'halogène, un groupe aliphatique perfluoré ou un groupe acide sulfonique, et X est un atome d'halogène tel qu'un fluor, un chlore, un brome et un iode, et un composé dihydroxy-aromatique représenté par la formule générale (8) ;
(Formule chimique 8) HO-Ar₂-OH (8)
dans lequel (dans la formule générale (8)) Ar₂ est un groupe en C₆-C₂₀ contenant un (des) cycle(s) aromatique(s), le groupe contenant un (des) cycle(s) aromatique(s) peut contenir un (des) cycle(s) aromatique(s) choisi(s) parmi un groupe phénylène et un groupe naphtylène, et les groupes phénylène multiples peuvent être liés les uns aux autres par l'intermédiaire d'un hétéroatome tel que N, O, S, un groupe cétone, un groupe sulfone ou un groupe aliphatique dans le groupe contenant un (des) cycle(s) aromatique(s), ou bien les atomes d'hydrogène dans le cycle aromatique peuvent être partiellement substitués avec un groupe aliphatique, un atome d'halogène, un groupe aliphatique perfluoré ou un groupe acide sulfonique.

7. Membrane électrolyte **caractérisée en ce que** la membrane électrolyte est obtenue en préparant une membrane à partir du polyéther aromatique sulfoné selon l'une quelconque de la revendication 1 à la revendication 4.
